# EUROPEAN PATENT SPECIFICATION

(11) **EP 0 991 723 B1**
(45) Date of publication and mention of the grant of the patent: **10.12.2003**
(21) Application number: 98932171.6
(22) Date of filing: 11.06.1998
(51) Int. Cl.: C08L 95/00

(54) **PAVING**
STRASSENBELAGMATERIAL
REVETEMENT

(30) Priority: 12.06.1997 EP 97201776
(43) Date of publication of application: 12.04.2000
(73) Proprietor: SHELL INTERNATIONALE RESEARCH MAATSCHAPPIJ B.V., 2596 HR Den Haag (NL)
(72) Inventor: SCHERMER, Wilhelmina, Elisabeth, Maria, NL-1031 CM Amsterdam (NL); STEERNBERG, Koen, NL-1031 CM Amsterdam (NL)
(86) International application number: EP9803702
(87) International publication number: WO98056858

(56) References cited:
- EP-A- 0 459 811
- WO-A-91/09907
- WO-A-96/20250
- US-A- 2 508 430
- US-A- 4 882 373

## Description

The present invention relates to a paving comprising a bitumen composition, to a process for preparing a bitumen composition, to a composition comprising aggregate and bitumen composition and to use of a bitumen composition for airfield pavements, buslanes and/or flooring of gas stations.

Bitumen is used as a binder in road asphalt mixtures. Bitumen compositions commonly used dissolve on prolonged exposure to oil fractions, which softens the pavement surface and can lead to accelerated loss of aggregate. This phenomenon is observed more markedly where the bitumen is more frequently in contact with oil fractions, such as airfield pavements, buslanes and flooring of gas stations. Therefore, it was investigated how the oil resistance, of bitumen compositions could be improved.

Surprisingly, it has now been found that a bitumen composition containing an acid blown bitumen and a polymer containing epoxy groups, has improved resistance to dissolving in oil fractions, i.e. a reduced amount of bitumen dissolves when the sample is immersed in the oil fraction.

The present invention relates to a paving comprising a bitumen composition containing an acid blown bitumen and a polymer containing epoxy groups. More specifically, the paving is of use in airfield pavement, buslanes and/or flooring of gas stations.

Accordingly, the present invention provides for a composition comprising from 90 to 99% by weight of aggregate and from 1 to 10% by weight of a bitumen composition containing an acid blown bitumen and a polymer containing epoxy groups, based on total amount of aggregate and bitumen composition; said bitumen composition containing between 95 and 99.9 % by weight of acid blown bitumen and between 0.1 and 5 % by weight of polymer containing epoxy groups, based on total composition, which composition contains less than 0.2 % by weight of amine anti-stripping additive, based on total composition. Further, the present invention provides for the use of a bitumen composition containing an acid blown bitumen and a polymer containing epoxy groups for paving, in which the paving is airfield pavement, buslanes and/or flooring of gas stations.

In WO 96/28513 it is described that a bitumen composition having an improved effective temperature range is obtained by reacting a polymer containing available epoxy groups with a bitumen in the presence of acid. In Example E, it is taught that it is undesirable to use bitumen pretreated with acid. The bitumen compositions obtained are described to be suitable for use in paving in general.

In US-A-5,519,073 it is described that it is advantageous to mix a terpolymer derived from the concurrent reaction of ethylene, normal butyl acrylate and glycidyl ester with an acid blown bitumen if subsequently between 0.2 to 2.0 weight percent of amine anti-stripping additive is added. The compositions are for use in road construction in general.

The acid blown bitumen to be used in the present invention, preferably is a bitumen obtainable by contacting bitumen with oxygen at a temperature of between 240 and 340 °C in the presence of an acid capable of reacting with the bitumen.

All types of bitumen, both naturally occurring and synthetically manufactured, can be used for subjecting to blowing in the presence of an acid. According to the invention, the term "bitumen" is meant to include materials designated by the term "asphalt". No distinction is made between these terms. Naturally occurring bitumen includes bitumens such as native rock asphalt and lake asphalt. Synthetically manufactured bitumen is often a by-product of petroleum refining operations and includes air-blown bitumen, blended bitumen, cracked or residual bitumen, petroleum bitumen, propane bitumen, straight run bitumen and thermal bitumen.

The bitumen composition of the present invention comprises acid blown bitumen optionally in combination with other hydrocarbon fractions, such as straight run bitumen. Residual oil fractions, gas oil and/or one or more fluxes can be added to decrease the viscosity. These can be added either to the acid blown bitumen or to the bitumen composition containing the polymer containing epoxy groups. Preferably, they are added to the acid blown bitumen. The bitumen composition preferably comprises 30-100 % by weight of acid blown bitumen, more preferably between 40 and 100 %, based on total amount of hydrocarbon fractions in the bitumen composition.

The acid blown bitumen preferably is a bitumen obtainable by contacting bitumen with oxygen at a temperature of between 240 and 340 °C in the presence of an acid capable of reacting with the bitumen.

The bitumen to be contacted with oxygen in the presence of acid, preferably has a penetration of from 50 to 500 dmm measured by ASTM D5 at 25°C, preferably of from 150 to 250 dmm.

The acid with which the bitumen is to be contacted can be any acid capable of reacting with the bitumen at the temperature mentioned, or precursors of such acids. These precursors form acids capable or reacting with the bitumen, at the reaction conditions. Preferred compounds to be used are one or more compounds chosen from the group of orthophosphoric acid, metaphosphoric acid, phosphonic acid, phosphorous acid, phosphorous pentoxide, phosphinic acid, phosphinous acid, pyrophosphoric acid, polyphosphoric acid, pyrophosphonic acid, trimethaphosphoric acid, sulphuric acid, boric acid, boronic acid, one or more alkyl substituents containing derivatives of these acids in which the alkyl substituent contains 1 to 15 carbon atoms, and precursors of these acids. Most preferably, the acid is orthophosphoric acid, metaphosphoric acid, polyphosphoric acid and/or phosphorous pentoxide.

Methods of preparing suitable acid blown bitumen cmprising different kinds of bitumen, have been described in EP-A-459 811. In UK patent application 9802312.0, a process has been described by which an acid blown bitumen can be prepared which can be used per se in the present invention.

A preferred acid blown bitumen has a penetration index of at least 0. Measurement of the penetration index has been described in the "The Shell bitumen industrial handbook", ISBN-0-95 16625-1-1, 1995, pages 100-104.

The acid blown bitumen can contain further additives known to be suitable to the skilled person. If an emulsion is to be obtained, water and emulsifier can be present.

The acid blown bitumen preferably has a penetration of from 15 to 70 as measured by ASTM D5 at 25°C, more preferably from 15 to 40, more specifically 15 to 30.

The polymer containing epoxy groups preferably is a polymer as described in WO-A-96/28513. Further, a curable blend containing the polymer containing epoxy groups in combination with an organic thermosetting resin can be used, as also described in WO-A-96/28513. Other preferred polymers have been described in US-A-5,306,750.

Preferably, the polymer containing epoxy groups is a polymer comprising:
(i) 40-90% by weight of ethene, based on polymer,
(ii) 0-40% by weight, based on polymer, of a monomer selected from unsaturated mono- and dicarboxylic acids of 3-20 carbon atoms, esters of such acids, vinyl esters of saturated carboxylic acids where the acid group has 1 to 18 carbon atoms, acrylonitrile, methacrylonitrile, alpha-olefins of 3-20 carbon atoms, norbornene and vinyl aromatic compounds, and
(iii) 0.1-15% weight percent, based on polymer, of an ethylenically unsaturated monomer of 4-21 carbon atoms containing an epoxy group.

Preferably, the polymer is a terpolymer of ethene, acrylate and glycidylacrylate.

Preferably, the polymer containing epoxy groups is mixed with a solvent before being contacted with the acid blown bitumen. Preferred solvents are water, residual oil fractions, gas oil fractions and fluxes. Most preferably, the polymer containing epoxy groups is mixed with flux, more specifically gas oil flux.

The bitumen composition preferably is a bitumen composition obtainable by contacting the acid blown bitumen with the polymer containing epoxy groups at a temperature of between 120 and 195°C, preferably at a temperature of between 140 and 180°C. The reaction will usually be carried out at ambient pressure.

Preferably, the bitumen composition comprises between 95 and 99.9% by weight of acid blown bitumen and between 0.1 and 5% by weight of polymer containing epoxy groups, weight based on total amount of acid blown bitumen and polymer containing epoxy groups. More preferably, the bitumen composition comprises between 95 and 99.8% by weight of acid blown bitumen between 0.2 and 5% by weight of polymer containing epoxy groups.

The paving will generally further contain aggregate.

The present invention further relates to a process for preparing a composition comprising from 90 to 99 % by weight of aggregate and from 1 to 10 % by weight of a bitumen composition containing an acid blow bitumen and a polymer containing epoxy groups, based on total amount of aggregate and bitumen composition; said bitumen composition containing between 95 and 99.9 % by weight of acid blown bitumen and between 0.1 and 5 % by weight of polymer containing epoxy groups, based on total composition, which composition contains less than 0.2% by weight of amine anti-stripping additive, based on total composition, which process comprises contacting bitumen with oxygen at a temperature of between 240 and 340°C in the presence of an acid capable of reacting with the bitumen and subsequently contacting the acid blown bitumen at a temperature of between 120 and 195° C with a polymer containing epoxy groups.

The paving of the present invention will generally contain aggregate, and optionally further conventional additives. If aggregate is present, the paving of the present invention preferably comprises from 90 to 99% by weight of aggregate and from 1 to 10% by weight of bitumen composition, based on total amount of aggregate and bitumen composition.

### EXAMPLES

An acid blown bitumen was prepared by adding 1.8 %w of phosphoric acid to a bitumen having a penetration of 200 dmm and blowing the mixture at a temperature of 275°C to obtain an acid blown bitumen having a penetration of 60/30 and a penetration index of 4. The acid blown bitumen was mixed with a flux, with straight run bitumen and with heavy gas oil. The base bitumen obtained contained 54 % by weight of acid blown bitumen and had a penetration of 200 pen and a penetration index of + 0.8.

The base bitumen was mixed with polymer using high shear disintegration at a temperature of 180 °C.

The polymers used were the following.

A copolymer of ethene and butylacrylate having a butylacrylate content of 35 %w.

A terpolymer of 28 %w of butylacrylate, 5 %w of glycidylacrylate and the remainder being ethene.

A terpolymer of 24 % methylacrylate, 8 % glycidylmethacrylate and the remainder being ethene.

A specimen of base bitumen and polymer was prepared in accordance with the Marshall method RAW 57. The specimen was immersed in a glass beaker which was filled with enough kerosene to fully submerse the asphalt specimen. After a period of 24 hours the specimen is taken out of the kerosene and dried in a fumeboard with ventilation until the weight does not change anymore. The difference in weight of the asphalt sample before and after exposure is taken as a measure for kerosene resistance.

| | Weight loss (%w) |
|---|---|
| polymer (% by weight) | |
| none | 6.6 |
| copolymer of ethene and butylacrylate (1%) | 6.6 |
| terpolymer of butylacrylate, glycidylacrylate and ethene (1%) | 1.3 |
| terpolymer of methylacrylate, glycidylmethacrylate and ethene (1%) | 0.8 |

## Claims

1. Composition comprising from 90 to 99% by weight of aggregate and from 1 to 10% by weight of a bitumen composition containing an acid blown bitumen and a polymer containing epoxy groups, based on total amount of aggregate and bitumen composition; said bitumen composition containing between 95 and 99.9 % by weight of acid blown bitumen and between 0.1 and 5 % by weight of polymer containing epoxy groups, based on total composition, which composition contains less than 0.2 % by weight of amine anti-stripping additive, based on total composition.

2. Composition according to claim 1, in which the acid blown bitumen has a penetration index of at least 0.

3. Composition according to any one of claims 1-2, in which the acid blown bitumen is obtainable by contacting bitumen with oxygen at a temperature of between 240 and 340 °C in the presence of an acid capable of reacting with the bitumen.

4. Composition according to any one of claims 1-3, in which the bitumen composition is obtainable by contacting the acid blown bitumen at a temperature of between 120 and 195 °C with a polymer containing epoxy groups.

5. Composition according to any one of claims 1-4, in which the polymer containing epoxy groups is a polymer comprising:
(i) 40-90 % by weight of ethene, based on polymer,
(ii) 0-40 % by weight, based on polymer, of a monomer selected from unsaturated mono- and dicarboyxlic acids of 3-20 carbon atoms, esters of such acids, vinyl esters of saturated carboyxlic acids where the acid groups has 1 to 18 carbon atoms, acrylonitrile, methacrylonitrile, alpha-olefins of 3-20 carbon atoms, norbornene and vinyl aromatic compounds, and
(iii) 0.1-15 % by weight, based on polymer, of an ethylenically unsaturated monomer of 4-21 carbon atoms containing an epoxy group.

6. Composition according to any one of claims 1-5, in which the acid blown bitumen has a penetration of from 15 to 70 dmm as measured by ASTM D5 at 25 °C.

7. Process for preparing a composition comprising from 90 to 99% by weight of aggregate and from 1 to 10% by weight of a bitumen composition containing an acid blown bitumen and a polymer containing epoxy groups, based on total amount of aggregate and bitumen composition; said bitumen composition containing between 95 and 99.9 % by weight of acid blown bitumen and between 0.1 and 5 % by weight of polymer containing epoxy groups, based on total composition, which composition contains less than 0.2 % by weight of amine anti-stripping additive, based on total composition, which process comprises preparing said bitumen composition by contacting bitumen with oxygen at a temperature of between 240 and 340°C in the presence of an acid capable of reacting with the bitumen and subsequently contacting the acid blown bitumen at a temperature of between 120 and 195°C with a polymer containing epoxy groups.

8. Use of a bitumen composition containing an acid blown bitumen and a polymer containing epoxy groups for paving, in which the paving is airfield pavement, buslanes and/or flooring of gas stations.

## Patentansprüche

1. Zusammensetzung, die von 90 bis 99 Gew.-% Aggregat und von 1 bis 10 Gew.-% einer Bitumenzusammensetzung umfaßt, die ein säuregeblasenes Bitumen und ein Epoxygruppen enthaltendes Polymer enthält, bezogen auf die Gesamtmenge aus Aggregat und Bitumenzusammensetzung; wobei diese Bitumenzusammensetzung zwischen 95 und 99,9 Gew.-% säuregeblasenes Bitumen und zwischen 0,1 und 5 Gew.-% Epoxygruppen enthaltendes Polymer enthält, bezogen auf die Gesamtzusammensetzung, welche Zusammensetzung weniger als 0,2 Gew.-% Amin-Anti-Stripping-Additiv enthält, bezogen auf die gesamte Zusammensetzung.

2. Zusammensetzung nach Anspruch 1, worin das säuregeblasene Bitumen einen Penetrationsindex von wenigstens 0 aufweist.

3. Zusammensetzung nach einem der Ansprüche 1 bis 2, worin das säuregeblasene Bitumen durch Inkontaktbringen von Bitumen mit Sauerstoff bei einer Temperatur zwischen 240 und 340°C in Anwesenheit einer zur Reaktion mit dem Bitumen befähigten Säure erhältlich ist.

4. Zusammensetzung nach einem der Ansprüche 1 bis 3, worin. das Bitumen durch Inkontaktbringen des säuregeblasenen Bitumens bei einer Temperatur zwischen 120 und 195°C mit einem Epoxygruppen enthaltenden Polymer erhältlich ist.

5. Zusammensetzung nach einem der Ansprüche 1 bis 4, worin das Epoxygruppen enthaltende Polymer ein Polymer ist, das umfaßt:
(i) 40-90 Gew.-% Ethen, bezogen auf Polymer,
(ii) 0-40 Gew.-%, bezogen auf Polymer, eines Monomers, das unter ungesättigten Mono- und Dicarbonsäuren mit 3 bis 20 Kohlenstoffatomen, Estern derartiger Säuren, Vinylestern von gesättigten Carbonsäuren, worin die Säuregruppe 1. bis 18 Kohlenstoffatome aufweist, Acrylnitril, Methacrylnitril, α-Olefinen mit 3 bis 20 Kohlenstoffatomen, Norbonen und vinylaromatischen Verbindungen ausgewählt ist, und
(iii) 0,1 bis 15 Gew.-%, bezogen auf Polymer, eines ethylenisch ungesättigten Monomers mit 4 bis 21 Kohlenstoffatomen und mit einem Gehalt an einer Epoxygruppe.

6. Zusammensetzung nach einem der Ansprüche 1 bis 5, worin das säuregeblasene Bitumen eine Penetration von 15 bis 70 dmm, bestimmt gemäß ASTM D5 bei 25°C, aufweist.

7. Verfahren zur Herstellung einer Zusammensetzung, die von 90 bis 99 Gew.-% Aggregat und von 1 bis 10 Gew.-% einer Bitumenzusammensetzung umfaßt, die ein säuregeblasenes Bitumen und ein Epoxygruppen enthaltenes Polymer enthält, bezogen auf die Gesamtmenge aus Aggregat und Bitumenzusammensetzung; wobei die Bitumenzusammensetzung zwischen 95 und 99,9 Gew.-% säuregeblasenes Bitumen und zwischen 0,1 und 5 Gew.-% Epoxygruppen enthaltendes Polymer enthält, bezogen auf die Gesamtzusammensetzung, welche Zusammensetzung weniger als 0,2 Gew.-% an Amin-Antistripping-Additiv enthält, bezogen auf die Gesamtzusammensetzung, welches Verfahren ein Inkontaktbringen von Bitumen mit Sauerstoff bei einer Temperatur zwischen 240 und 340°C in Anwesenheit einer Säure, die zur Reaktion mit dem Bitumen befähigt ist, und anschließend ein Inkontaktbringen des säuregeblasenen Bitumens bei einer Temperatur zwischen 120 und 195°C mit einem Epoxygruppen enthaltenden Polymer umfaßt.

8. Verwendung einer Bitumenzusammensetzung mit einem Gehalt an säuregeblasenem Bitumen und an einem Epoxygruppen enthaltenden Polymer für Beläge, worin der Belag ein Flugfeldbelag, eine Busspur und/oder ein Bodenbelag für Tankstellen ist.

## Revendications

1. Composition comprenant de 90 à 99% en poids d'agrégat et de 1 à 10% en poids d'une composition de bitume contenant un bitume soufflé à l'acide et un polymère contenant des groupes époxy, par rapport à la quantité totale d'agrégat et de composition de bitume, ladite composition de bitume contenant entre 95 et 99,9% en poids de bitume soufflé à l'acide et entre 0,1 et 5% en poids de polymère contenant des groupes époxy, par rapport à la composition totale, laquelle composition contient moins de 0,2% en poids d'additif d'accrochage du type amine, par rapport à la composition totale.

2. Composition suivant la revendication 1, dans laquelle le bitume soufflé à l'acide a un indice de pénétration d'au moins 0.

3. Composition suivant l'une ou l'autre des revendications 1 et 2, dans laquelle le bitume soufflé à l'acide est obtenable par la mise en contact de bitume et d'oxygène à une température entre 240 et 340°C en présence d'un acide pouvant réagir avec le bitume.

4. Composition suivant l'une quelconque des revendications 1 à 3, dans laquelle la composition de bitume est obtenable par la mise en contact du bitume soufflé à l'acide à une température entre 120 et 195°C avec un polymère contenant des groupes époxy.

5. Composition suivant l'une quelconque des revendications 1 à 4, dans laquelle le polymère contenant des groupes époxy est un polymère contenant :
(i) 40-90% en poids d'éthène, par rapport au polymère,
(ii) 0-40% en poids, par rapport au polymère, d'un monomère choisi parmi les acides mono- et dicarboxyliques insaturés de 3-20 atomes de carbone, les esters de ces acides, les esters vinyliques d'acides carboxyliques saturés où le groupe acide comporte 1 à 18 atomes de carbone, l'acrylonitrile, le méthacrylonitrile, les alpha-oléfines de 3-20 atomes de carbone, le norbornène et les composés aromatiques vinyliques, et
(iii) 0,1-15% en poids, par rapport au polymère, d'un monomère éthyléniquement insaturé de 4-21 atomes de carbone contenant un groupe époxy.

6. Composition suivant l'une quelconque des revendications 1 à 5, dans laquelle le bitume soufflé à l'acide a une pénétration de 15 à 70 dmm telle que mesurée par la méthode ASTM D5 à 25°C.

7. Procédé de préparation d'une composition comprenant de 90 à 99% en poids d'agrégat et de 1 à 10% en poids d'une composition de bitume contenant un bitume soufflé à l'acide et un polymère contenant des groupes époxy, par rapport à la quantité totale d'agrégat et de composition de bitume, ladite composition de bitume contenant entre 95 et 99,9% en poids de bitume soufflé à l'acide et entre 0,1 et 5% en poids de polymère contenant des groupes époxy, par rapport à la composition totale, laquelle composition contient moins de 0,2% en poids d'additif d'accrochage du type amine par rapport à la composition totale, lequel procédé comprend la préparation de la composition de bitume précitée par la mise en contact de bitume et d'oxygène à une température entre 240 et 340°C en présence d'un acide pouvant réagir avec le bitume et ensuite la mise en contact du bitume soufflé à l'acide à une température entre 120 et 195°C avec un polymère contenant des groupes époxy.

8. Utilisation d'une composition de bitume contenant un bitume soufflé à l'acide et un polymère contenant des groupes époxy pour le pavage, dans laquelle le pavage est un pavement d'aéroport, des couloirs réservés aux bus et/ou un revêtement de sol de postes de ravitaillement en carburant.
